# EUROPEAN PATENT SPECIFICATION

(11) **EP 2 537 777 B1**
(45) Date of publication and mention of the grant of the patent: **27.07.2016**
(21) Application number: 12171696.3
(22) Date of filing: 12.06.2012
(51) Int. Cl.: B65D 85/804

(54) **Single-use cartridge for preparation of drinks**
Einwegkartusche zur Herstellung von Getränken
Cartouche à usage unique pour la préparation de boissons

(30) Priority: 22.06.2011 IT RE20110048
(43) Date of publication of application: 26.12.2012
(73) Proprietor: Coop Industria - Societa' Cooperativa, 40013 Castel Maggiore (Bologna) (IT)
(72) Inventor: Alberti, Vincenzi, 40013 Castel Maggiore (Bologna) (IT)
(74) Representative: Corradini, Corrado

(56) References cited:
- EP-A1- 1 344 724
- EP-A1- 1 900 653
- EP-A2- 0 326 685
- WO-A1-93/17932
- WO-A1-2005/080223
- WO-A1-2011/117768
- CA-A1- 2 734 843
- US-A1- 2005 172 822
- US-A1- 2010 092 629
- US-A1- 2011 142 996

## Description

### Technical Field

The present invention relates to a single-use cartridge for preparation of drinks, typically coffee, tea or other drinks that can be obtained by infusion or solution of a foodstuff substance in granular or powder form.

### Prior Art.

As is known, a single-use cartridge for preparing drinks generally comprises a beaker-shaped body having a mouth delimited by a flange projecting towards the outside, a dose of a foodstuff substance contained internally of the beaker body, and a closing membrane applied on the flange in order to seal the mouth of the beaker body.

Though maintaining the base structure, at present very numerous single-use cartridges exist, generally having shapes and dimensions that are at least slightly different from one another, which can however be sub-divided into two large categories: closed cartridges, also known as pierceable, and open cartridges, also known as pre-pierced.

In closed cartridges, the beaker body and the closing membrane of the cartridge are both made of a continuous and waterproof material, such as to completely insulate the internal environment, in which the dose of foodstuff substance is effectively contained, from the outside environment.

This continuous and waterproof material is generally rather slim, such that the flange of the beaker body also exhibits a very small thickness, typically in the order of a few tenths of millimetres.

In the open cartridges, the beaker body and the closing membrane of the cartridge are pierced, with holes that are sufficiently small for retaining the foodstuff substance inside, but large enough to enable passage of the fluid, typically water, required for realising the infusion or the solution of the foodstuff.

In this case, the material the beaker body and closing membrane are made of is generally much thicker, such as to provide a cartridge which is much more rigid and sturdy than the closed ones, such that the flange of the beaker body also exhibits a considerably greater thickness, typically in the order of some millimetres.

In order to protect the foodstuff substance and conserve the aesthetic and flavour qualities thereof, the open cartridges are singly packed and supplied internally of sealed envelopes made of continuous and waterproof material, differently to closed cartridges, which are usually supplied loose.

Each type of cartridge is generally destined to be used in a dedicated machine, which is specially configured in order to be able to prepare drinks using only that specific type of cartridge.

Notwithstanding this, all these machines exhibit a rather similar structure which schematically comprises a boiler for heating the water, an infusion group destined to receive the cartridge, and a pump for pumping the hot water from the boiler and supplying it to inside the infusion group.

The infusion group usually comprises a cup-shaped body generally provided with a mouth delimited by a flange, which exhibits an internal shape that is substantially complementary to the shape of the cartridge and is therefore destined to accommodate the cartridge; a closing body suitable for closing the mouth of the cup-shaped body, such as to close the cartridge in a closed infusion chamber, means for introducing the hot water coming from the boiler internally of the infusion chamber, and means for dispensing the drink externally of the infusion chamber.

The closing body is generally unremovably fixed to the machine, while the cup-shaped body can be separable from the machine, or can be mobile on the machine between an open position and a closed position of the infusion chamber, according to the type of machine.

The infusion group for closed cartridges must comprise, beyond what is described, means for piercing the cartridge contained internally of the infusion chamber, before supplying the hot water.

On the other hand, the infusion groups generally comprise sealing means in the cup-shaped body and the closing body, such that the closing body and the cup-shaped body, when abutting against one another or against the cartridge, can sealingly close the infusion chamber.

Because of manufacturing defects of the cartridge and/or wear phenomena which involve the lowering or the sealing organs of the infusion group, the tight grip between the closing body and the cup-shaped body and/or between the closing body and the cartridge sometimes does not guarantee hermetic closure of the coupling between the cartridge and the infusion group, such that regular outflow of the water coming from the boiler towards the inside of the infusion chamber is compromised, as well as the dispensing of the drink externally of the infusion chamber, with leakage of water from the infusion chamber.

This phenomenon is most greatly noted in cases in which the infusion chamber is open, i.e. in which the cup-shaped body exhibits very low lateral walls, such that the cartridge is maintained crushed between the cup-shaped body (substantially plate-conformed and in contact with the cartridge only at the bottom thereof) and the closing body (also plate-shaped and in contact with the cartridge only at the flange located at the top thereof).

In practice, in these infusion chambers the lateral wall of the cartridge functions as a lateral wall of the infusion chamber; it is therefore clear that should (for reasons of imperfect shape or wear) the coupling between the cartridge and the cup-shaped body and/or the closing body be compromised, the hermetic seal of the whole infusion chamber is also compromised, with considerable damage caused to the whole machine.

Examples of known-type cartridges for preparing drinks are described in documents EP 0326685 A1 and EP 1344724.

EP 0326685 A1 discloses a cartridge for preparing beverages, which comprises a container body made of paper or cardboard, in a beaker shape, and a substance, placed inside a filter sachet, for preparing the drink, which sachet is placed inside the beaker body.

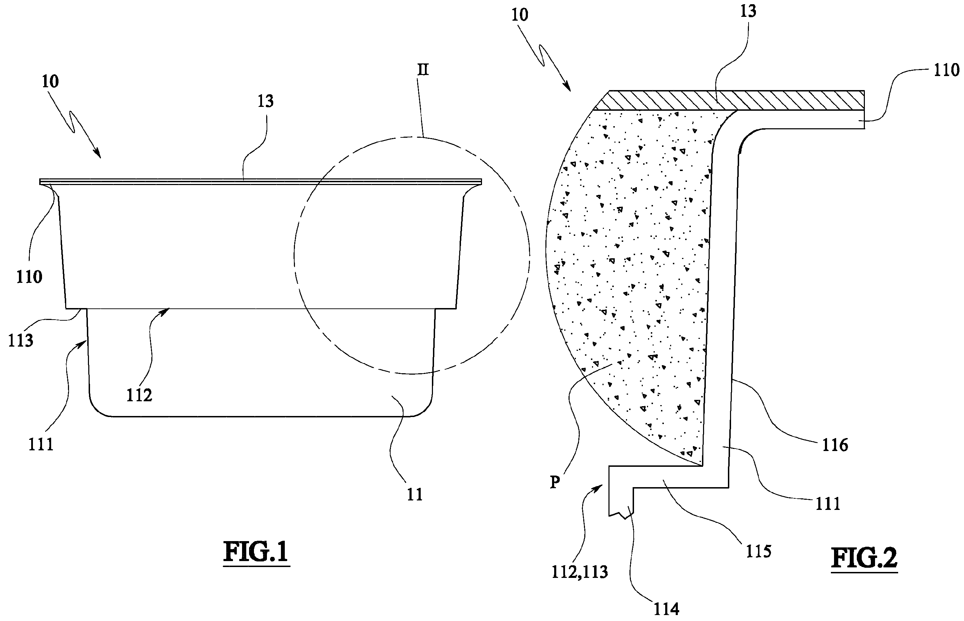

The lateral wall of the beaker body comprises plastically deformable zones of a type having preformed pleats which are destined to close up following an axial compression exerted on the cartridge, such as to bring the cartridge from an extended position (figure 1) in which it can be used, for example filled with the substance to be infused, to a collapsed position of smaller volume (figure 2) in which it is non-operational.

EP 1344724 A1 illustrates, on the other hand, a traditional cartridge for preparing drinks, comprising a beaker body made of a waterproof material and a substance for preparing the drink contained internally of the beaker body, in which the lateral wall of the beaker body comprises an inclined step, which functions exclusively as a fixed abutment for a filter which is to be arranged internally of the beaker body and fixed to the internal wall of the step. The filter is destined to subdivide the internal volume of the beaker body into two distinct chambers.

US 2005/172822 discloses a cartridge for preparing coffee. The cartridge comprises a container made in a single piece by injection moulding of hard plastic material such as polypropylene. The bottom wall and the sidewall of the container have a thickness calculated to make sure that the container has a certain rigidity to be able to withstand high pressures even for long periods of time.

US 2011/0142996 discloses a cartridge for the preparation of beverages in which rib-like channels are provided along its side wall. The channels have the function to prevent the lateral deformation of the cartridge during the introduction of hot water under pressure in the preparation of the drink. By effect of the rigidity of the channels, deformation of the cartridge is prevented.

EP 1 900 653 describes a cartridge for the preparation of beverages in which, on its bottom, a shaped edge of reinforcement is provided. The function of the shaped edge is to reduce the deformation of the lower edge of the cartridge during the operation of the coffee machine.

Document WO 2005/080 223 discloses a cartridge for the preparation of beverages in which, the bottom of the same presents an opening portion shaped in such a way that it its various section during the preparation of the beverage, thanks to the deformation of the flexible portions of the bottom itself.

Document WO 20115/117768 discloses various embodiments of a cartridge for the preparation of beverages. The cartridge has a deformable intermediate portion along its body. In a first phase of the brewing operations, when the cartridge is not subjected to forces, the deformable intermediate portion is in a retracted configuration. In a second phase when the cartridge is extracted from the machine the deformable intermediate portion is in an extended configuration. The intermediate portion can be deformed as a result of an increase in the pressure inside the cartridge itself.

### Disclosure of the invention

An aim of the present invention is to obviate the above-mentioned drawbacks in the prior art, with a solution that is simple, rational and relatively inexpensive.

The aims are attained by the characteristics of the invention as reported in the independent claims.

The dependent claims delineate preferred and/or particularly advantageous aspects of the invention.

The invention in particular discloses a cartridge as disclosed in claim 1.

Thanks to this solution, the cartridge exhibits a beaker-shaped body that is elastically deformable by compression and is such as to occupy, without play, the space interposed between the beaker-shaped body and the closing body of the infusion group it is insertable in.

### Brief Description of the Drawings

Further characteristics and advantages of the invention will emerge from a reading of the following description, provided by way of non-limiting example, with the aid of the figures of the accompanying drawings.
Figure 1 is a lateral view of a closed cartridge for preparation of a drink, according to an embodiment of the present invention.
Figure 2 is detail II of figure 1, shown in section and in an enlarged view.
Figure 3 is an axonometric view of a cartridge, open for preparation of a drink, in a first embodiment of the present invention.
Figure 4 is a lateral view of figure 3.
Figure 5 is a section along line VI-VI of figure 2.
Figure 6 is a lateral view of a first embodiment of an infusion group destined to operate with the filter cartridge of figure 3.
Figure 7 is a section along line VII-VII of figure 6.
Figure 8 is the detail VIII of figure 7, shown in enlarged scale.
Figure 9 is a view in longitudinal section of a second embodiment of an infusion group, destined to operate with the cartridge of figure 1.

### Best Mode of Carrying Out the Invention

With reference to the above figures, a single-use cartridge 10 is illustrated for preparing drinks, typically coffee, tea or other drinks obtainable by infusion or by solution of a granular or powder foodstuff substance.

The cartridge 10 comprises a body 11 having a beaker conformation, i.e. conformed as a container closed at the bottom and provided with an open mouth opposite.

The form of the beaker-shaped body 11 can be of any type, for example truncoconical as in the figures, or cylindrical, hemispherical or another shape.

The mouth of the beaker body 11 is delimited by a flat perimeter flange 110, which projects from the top of the lateral wall 111 of the beaker body 11, developing towards the outside of the cavity.

The perimeter flange 110 is made in a single body with the beaker body 11.

The beaker body 11 is made of an elastically yielding material, waterproof and continuous, i.e. without holes or openings, such as to constitute an effective barrier against passage of liquids and preferably also gases.

The walls of the beaker body 11, as well as the perimeter flange 110, are further rather slim.

The beaker body 11 is preferably made of plastic, for example by means of a heat-forming process, although it could also be made using other materials, among which for example aluminium.

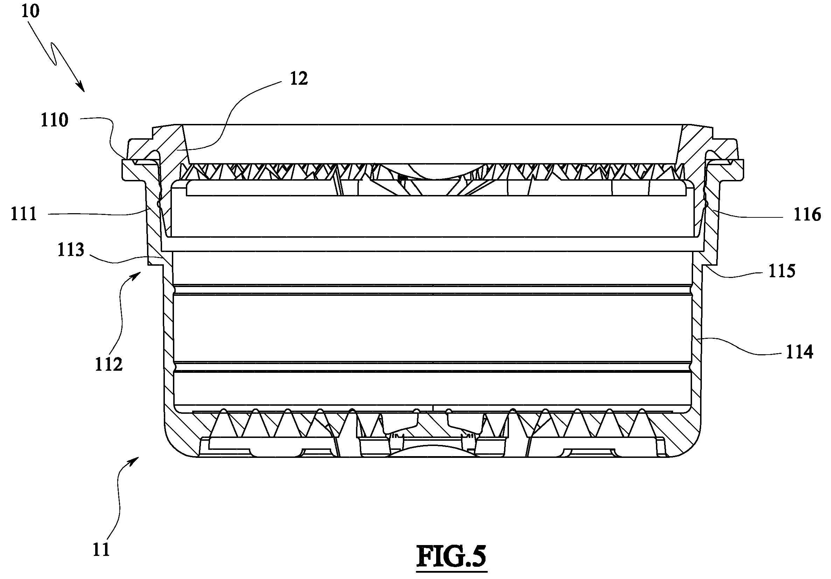

The beaker body 11 contains a dose of foodstuff substance P, granular or powder (see figure 5) which, by infusion or solution in water, is able to realise the drink.

Figures 1 and 2 illustrate a cartridge 10 known as a closed cartridge, which is pierceable.

The cartridge 10 comprises a film 13 which is applied on the perimeter flange 110, such as to close the mouth of the beaker body 11, after introduction of the batch of foodstuff substance P.

The closing film 13 is also made of a waterproof and continuous material, and is fixed on the perimeter flange 110, such as to hermetically seal the foodstuff substance P with respect to the external environment.

The closing film 13 is therefore rather slim, of the order of a few tenths of a millimetre.

The closing film 13 is preferably made of aluminium and is fixed on the perimeter flange 110 by heat welding, although it could also be made using other materials, among which for example plastic.

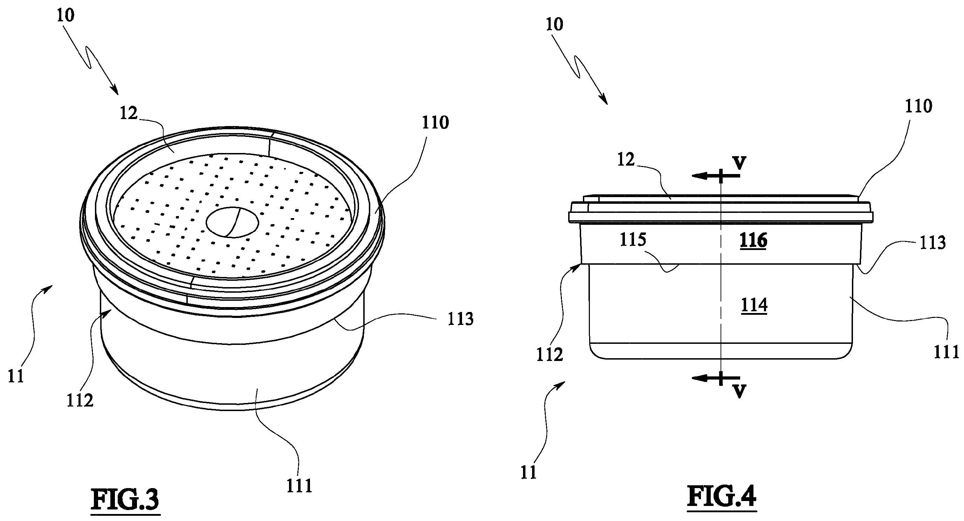

In figures 3-5, a cartridge 10 is illustrated that is of open or pre-pierced type.

Similarly to the preceding cartridge, the cartridge 10 comprises a beaker body 11 suitable for containing the dose of foodstuff, which exhibits a mouth that is delimited by a flange 110 projecting externally, and is closed by a cover 12 fixed to the flange 310.

The bottom of the beaker body 11 and the closing cover 12 are both pierced, with sufficiently small holes such as to retain the food substance therein, but both large enough for enabling passage of water.

In this case, the beaker body 11 and the closing cover 12 both have a larger wall thickness than the preceding cartridge, for example obtained by means of a moulding process of plastic material, and therefore the cartridge overall is more rigid and less deformable.

For the aims of the present invention, the lateral wall 111 of the beaker body 11 (for example both of the cartridges 10) comprises at least a resilient zone 112 having controlled deformation and destined to elastically yield following an axial compression externally on the cartridge 10, and exerting an axial-thrust elastic reaction.

In particular, thanks to the zone 112, the beaker body 11 is elastically deformable, like a compression spring, following a not-excessively high pressure along the axial direction, both in the case of an open cartridge 10 (generally more rigid and undeformable) and in the case of closed cartridges (generally having a slimmer wall).

In practice, following the axial compression exerted on the beaker body 11 it modifies its shape such as to reduce (although by only a small amount) the axial size thereof (nearing the flange 110 to the bottom of the beaker body); thanks to the presence of the resilient zone 112, once the axial compression is removed or partly removed the beaker body 11 tends to return, by exerting an axial traction thrust, into the expanded equilibrium position thereof, i.e. the zone 112 tends to distance the flange 110 from the bottom of the beaker body 110.

In practice, the deformation of the beaker body 11, located in the zone 112 and controlled by the configuration thereof, occurs substantially without variation of the internal volume thereof.

Thus it can be understood that when the cartridge 10 is inserted between two walls that are distanced from one another by a distance that is smaller than a nominal height of the beaker body 11, the elastic reaction of the zone 112 of the beaker body 11 is such as to exert an active thrust of the bottom of the beaker body and the closing cover 12 on the walls.

In the preferred embodiment, shown in the figures, the zone 112 which for example is comprised between the flange 110 and the bottom of the beaker body 11 comprises a step 113 made at the lateral wall 111 of the beaker body 11.

If the beaker body 11 is made of aluminium or another metal having a low elastic constant, the shape of the step (appropriately sizing the length of the horizontal portion with respect to the vertical portions) or the corners can be of such dimensions as to have a sufficient elastic thrust reaction with a modest compression.

The step 113 divides the lateral wall 111 into three consecutive tracts 114, 115, 116, of which:
a first tract 114, which derives directly from the bottom of the beaker body 11, and exhibits a prevalent development along the axial direction;
a second tract 115, inclined with respect to the axial direction and consecutive to the first (for example perpendicular thereto); and
a third tract 116, consecutive to the second tract, from which the flange 110 derives and which exhibits a prevalent development along the axial direction. The second tract 115, which defines the step 113, is particularly suitable for elastically flexing with respect to the first and the third tracts, following a slight axial compression exerted between the bottom and the flange 110 of the beaker body 11.

In practice, the step conformation of the zone (112) enables a controlled deformation of the beaker body 11, in the sense that the variation of the axial size thereof is limited to a few millimetres by the structural characteristics of the zone 112, which cannot totally collapse, not even when the cartride 10 is open and can be dimensioned according to the constructional needs.

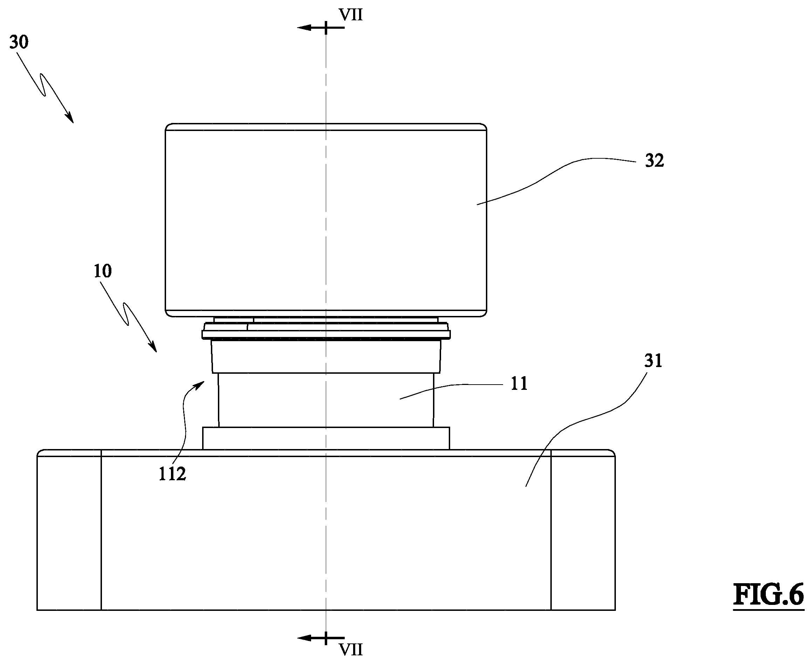

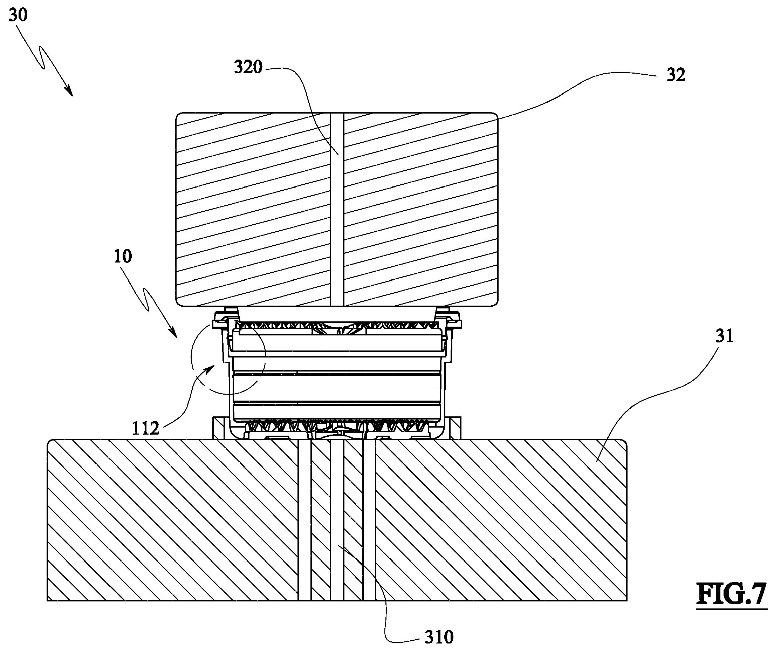

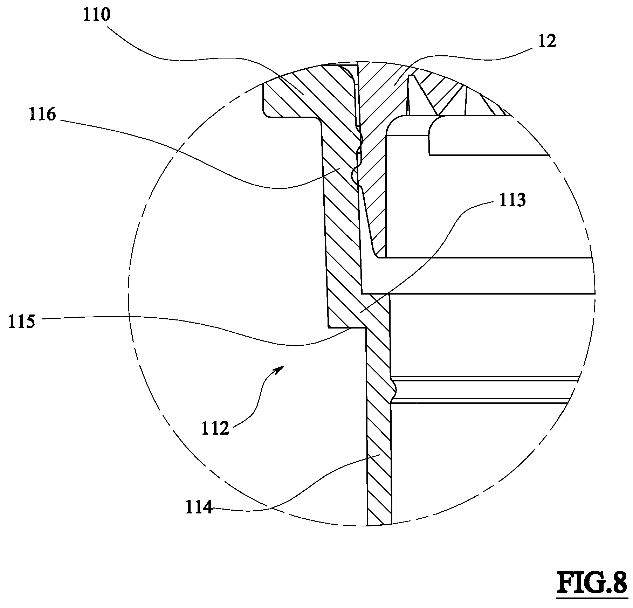

The cartridge 10 can be used by a machine which generally comprises a boiler for heating the water, an infusion group 30 (see figures 6-9) destined to accommodate the cartridge 10, and a pump for pumping the hot water from the boiler and supplying it to inside the infusion group 30.

The pump and the boiler, as well as the casing of the machine, the hydraulic circuits and the accessory apparatus, are not illustrated and described herein in detail as they are widely known to the technician in the sector.

The infusion group 30, which in in the illustrated example is of the laterally-open type, comprises a cup-shaped body 31 destined to accommodate the cartridge 10, which exhibits, on the bottom thereof, a dispensing spout 310 of the drink, and an opposite mouth for introduction and extraction of the cartridge 10.

The cup-shaped body 31 exhibits lateral walls having a much smaller height than that of the lateral walls 111 of the beaker body 11.

The infusion group 30 further comprises a cylindrical closing plate 32, which is suitable for closing on the beaker body 11 and abutting against the flange 110 in such a way as to define a closed infusion chamber, coinciding with the internal volume of the beaker body, which completely closes the foodstuff.

The infusion chamber is hermetically closed by special seals interposed between the cup-shaped body 31 and the cartridge 10 and the closing plate 32 and the cartridge.

Thus the beaker body 11, or in any case the cartridge 10, exhibits an axial size (height) that is oversized with respect to the axial size of the infusion chamber, defined by the distance between the bottom of the cup-shaped body 31 and the closing plate 32, such that the cartridge 10 can be inserted in the infusion chamber by exerting an axial compression on the beaker body 11 which causes a contained axial deformation thereof.

This therefore leads to an elastic reaction of the zone 112, such as to maintain the bottom of the beaker body 11 constantly pressed, with an active force, against the bottom of the cup-shaped body 31 and the closing cover 12 against the closing plate 32.

Channels 320 are comprised in the closing plate 32 which open on the surface facing the cartridge 10 thereof, destined to be set in fluid communication with the infusion chamber (the inside of the beaker body 11), such as to connect the water supply pump with the infusion chamber.

The closing plate 32 can be unremovably fixed to the machine, while the cup-shaped body 31 can be separable and engageable to the machine by means of a screw system which enables axially nearing the cup-shaped body 31 to the fixed closing plate 32.

Alternatively, the cup-shaped body 31 could be unremovably associated to the machine and be axially mobile thereon, between an open position and a closed position.

The locking action of the cup-shaped body 31 on the closing plate 32 (or vice versa), or in any case the insertion of the cartridge 10 between them, slightly axially compresses the beaker body 11, such as to elastically deform the zone 112. In this way, the lateral wall 111 of the beaker body 11, when located internally of the machine, i.e. when interposed, in use, between the beaker body 31 and the closing plate 32, constantly exerts a thrust, via the bottom of the beaker body 11 and the flange 110, respectively on the cup-shaped body 31 and on the closing plate 32, such as to compress the seal gaskets interposed between the cartridge 10 and the components of the infusion group 30 and, therefore, to guarantee the hermetic sealing of the infusion chamber.

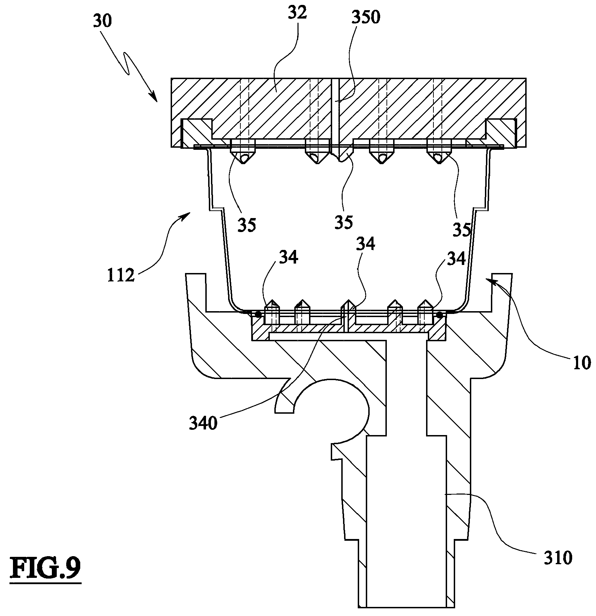

If closed cartridges 10 are used, as illustrated in figure 9, the bottom of the beaker body 31 comprises a plurality of needles 34, in the present example having a conical tip, which are borne by a support plate which is housed in a cavity on the bottom of the cup-shaped body 31, and which project towards the closing plate 32.

Each of these needles 34 exhibits a central hole 340 which is located hydraulically in communication with the dispensing spout 310 of the drink. Likewise, the closing plate 32 comprises a plurality of needles 35, also conically-tipped, which project towards the cup-shaped body 31.

Each of the needles 35 exhibits a central hole 350 which is located hydraulically in communication with the water supply pump.

The height of the needles 34, 35, as well as the depth of the cup-shaped body 31, are selected in such a way that when the cartridge 10 is in position (interposed between the cup-shaped body 31 and the closing plate 32), the needles 34 and 35 will respectively have pierced the bottom of the beaker body 11 and the closing film 13 of the cartridge 10, such that the relative central holes 340 and 350 are in communication with the internal volume of the cartridge 10 (see figure 9).

At this point, the hot water is supplied from the boiler to the infusion chamber through the central holes 350 such that it mixes with the foodstuff contained in the cartridge 10, realising, by infusion or solution, a drink which, via the central holes 340, exits finally from the infusion chamber through the dispensing spout 310.

The invention as it is conceived is susceptible to numerous modifications and variants, all falling within the scope of the following claims.

## Claims

1. A cartridge (10) for preparation of drinks suitable to be inserted in an infusion chamber of a machine which exhibits an axial size that is smaller than the axial size (height) of the cartridge, and comprising a body (11), beaker-shaped and made of a waterproof material, and a substance (P) for preparation of the drink contained internally of the beaker body (11), **characterised in that** the lateral wall (111) of the beaker body (11) comprises at least a resilient zone (112) made of an elastically yielding material, said zone (112) having controlled deformation and destined to yield elastically following an axial compression externally on the cartridge (10) and to exert an axial elastic thrust reaction, wherein the resilient zone (112) comprises a step (113) realised at the lateral wall (111) of the beaker-shaped body (11), the step (113) dividing the lateral wall (111) into three consecutive tracts (114,115,116), the second tract (115) being inclined with respect to the axial direction.

2. The cartridge (10) of claim 1, wherein the beaker-shaped body (10) exhibits a mouth delimited by a perimeter flange (110) projecting in an external direction.

3. The cartridge of claim 2, **characterised in that** it comprises a membrane (12, 13) applied on the perimeter flange (110) in such a way as to close the mouth of the beaker body (11).

4. The cartridge of claim 3, wherein the membrane (13) exhibits a plurality of holes, the bottom of the cartridge exhibiting further holes.

5. The cartridge of claim 3, wherein the membrane (12) is made of a thin and continuous layer of pierceable waterproof material, the bottom of the beaker-shaped body (11) being also made of a thin layer of pierceable waterproof material.

6. The cartridge (10) of claim 1, wherein the elastically yielding material is plastic or aluminium.

7. A method for preparing a drink using the cartridge (10) of claim 1, for preparation of drinks in an infusion group (30) having an infusion chamber which exhibits an axial size that is smaller than the axial size (height) of the cartridge, the method comprising the steps of:
- inserting the cartridge (10) between a cup-shaped body (31) and a closing plate (32) of the infusion group (30),
- compressing the cartridge (10) in a substantially axial direction to elastically deform a resilient zone (112) of the cartridge (10) made of an elastically yielding material, until an axial elastic thrust reaction thereof is sufficient to guarantee an hermetic sealing of the infusion chamber,
- supplying hot liquid through the cartidge (10),
- dispensing the obtained drink through a dispensing spout (310).

8. A method for preparing a drink as in claim 7, further comprising a step of perforating a bottom portion and an upper portion of the cartridge (10).

## Patentansprüche

1. Kartusche (10) zum Zubereiten von Getränken, die geeignet ist, in eine Brühkammer einer Maschine eingesetzt zu werden, die eine axiale Höhe aufweist, die kleiner als die axiale Größe (Höhe) der Kartusche ist, wobei die Kartusche einen Körper (11) umfasst, der becherförmig ist und aus einem wasserdichten Material besteht, und im Inneren des Becherkörpers (11) eine Substanz (P) für das Zubereiten des Getränks enthalten ist, **dadurch gekennzeichnet, dass** die Seitenwand (111) des Becherkörpers (11) mindestens eine dehnbare Zone (112) umfasst, die aus einem elastisch nachgebenden Material besteht, wobei die Zone (112) eine kontrollierte Deformation aufweist und dafür vorgesehen ist, einer von außerhalb der Kartusche (10) erfolgenden axialen Komprimierung elastisch nachzugeben und eine axiale elastische Schubreaktion zu erzeugen, wobei die dehnbare Zone (112) eine Abstufung (113) umfasst, die in der Seitenwand (111) des becherförmigen Körpers (11) umgesetzt ist, wobei die Abstufung (113) die Seitenwand (111) in drei aufeinanderfolgende Trakte (114, 115, 116) teilt, wobei der zweite Trakt (115) im Verhältnis zur axialen Richtung geneigt ist.

2. Kartusche (10) nach Anspruch 1, wobei der becherförmige Körper (10) eine Mündung aufweist, die durch einen Umfangsflansch (110) begrenzt ist, der in äußerer Richtung hervorsteht.

3. Kartusche (10) nach Anspruch 2, **dadurch gekennzeichnet, dass** sie eine Membran (12, 13) umfasst, die in einer Weise am Umfangsflansch (110) anliegt, dass die Mündung des Becherkörpers (11) geschlossen ist.

4. Kartusche (10) nach Anspruch 3, wobei die Membran (13) mehrere Öffnungen aufweist, wobei der Boden der Kartusche weitere Öffnungen aufweist.

5. Kartusche (10) nach Anspruch 3, wobei die Membran (12) aus einer dünnen und durchgehenden Schicht aus durchstechbarem, wasserdichtem Material besteht, wobei der Boden des becherförmigen Körpers (11) ebenfalls aus einer dünnen Schicht aus durchstechbarem, wasserdichtem Material besteht.

6. Kartusche (10) nach Anspruch 1, wobei das elastisch nachgebende Material Kunststoff oder Aluminium ist.

7. Verfahren zur Zubereitung eines Getränks mit Hilfe der Kartusche (10) nach Anspruch 1, zur Zubereitung von Getränken in einer Brühgruppe (30) mit einer Brühkammer, welche eine axiale Größe aufweist, die kleiner als die axiale Größe (Höhe) der Kartusche ist, wobei das Verfahren folgende Schritte umfasst:
Einsetzen der Kartusche (10) zwischen einem becherförmigen Körper (31) und einer Verschlussplatte (32) der Brühgruppe (30),
Komprimieren der Kartusche (10) in im Wesentlichen axialer Richtung, um eine dehnbare Zone (112) der Kartusche (10), die aus einem elastisch nachgebenden Material besteht, elastisch zu verformen, bis deren axiale elastische Schubreaktion ausreicht, einen hermetischen Verschluss der Brühkammer zu gewährleisten,
Zuführen heißer Flüssigkeit durch die Kartusche (10),
Ausgeben des erzielten Getränks durch eine Ausgabetülle (310).

8. Verfahren zur Zubereitung eines Getränks nach Anspruch 7, ferner einen Schritt des Durchstechens eines Bodenabschnitts und eines oberen Abschnitts der Kartusche (10) umfassend.

## Revendications

1. Cartouche (10) de préparation de boissons adaptée pour être insérée dans une chambre d'infusion d'une machine qui présente une taille axiale inférieure à la taille axiale (hauteur) de la cartouche, et comprenant un corps en forme de gobelet (11) constitué d'un matériau étanche à l'eau, et une substance (P) pour la préparation de la boisson contenue à l'intérieur du corps de gobelet (11), **caractérisée en ce que** la paroi latérale (111) du corps de gobelet (11) comprend au moins une zone flexible (112) constituée d'un matériau à déformation élastique, ladite zone (112) présentant une déformation contrôlée et étant destinée à se déformer élastiquement suite à une compression axiale externe exercée sur la cartouche (10) et à exercer une réaction de poussée élastique axiale, dans laquelle la zone flexible (112) comprend un redan (113) réalisé sur la paroi latérale (111) du corps en forme de gobelet (11), le redan (113) divisant la paroi latérale (111) en trois sections consécutives (114, 115, 116), la deuxième section (115) étant inclinée par rapport à la direction axiale.

2. Cartouche (10) selon la revendication 1, dans laquelle le corps en forme de gobelet (10) présente une bouche délimitée par une bride périmétrique (110) qui se projette en direction externe.

3. Cartouche selon la revendication 2, **caractérisée en ce qu'**elle comprend une membrane (12, 13) appliquée sur la bride périmétrique (110) de manière à fermer la bouche du corps de gobelet (11).

4. Cartouche selon la revendication 3, dans laquelle la membrane (13) présente une pluralité de trous, la partie inférieure de la cartouche présentant d'autres trous.

5. Cartouche selon la revendication 3, dans laquelle la membrane (12) est constituée d'une couche mince et continue d'un matériau étanche à l'eau perçable, la partie inférieure du corps en forme de gobelet (11) étant également constituée d'une couche mince de matériau étanche à l'eau perçable.

6. Cartouche (10) selon la revendication 1, dans laquelle le matériau à déformation élastique est du plastique ou de l'aluminium.

7. Procédé préparation d'une boisson en utilisant la cartouche (10) selon la revendication 1, pour la préparation de boissons dans un groupe d'infusion (30) comportant une chambre d'infusion qui présente une taille axiale inférieure à la taille axiale (hauteur) de la cartouche, le procédé comprenant les étapes suivantes :
- insertion de la cartouche (10) entre un corps en forme de gobelet (31) et une plaque de fermeture (32) du groupe d'infusion (30),
- compression de la cartouche (10) en direction sensiblement axiale pour déformer élastiquement une zone flexible (112) de la cartouche (10) constituée en un matériau à déformation élastique, jusqu'à ce qu'une réaction de poussée élastique axiale correspondante soit suffisante pour garantir une étanchéité hermétique de la chambre d'infusion,
- alimentation d'un liquide chaud à travers la cartouche (10),
- distribution de la boisson obtenue à travers un goulot de distribution (310).

8. Procédé de préparation d'une boisson selon la revendication 7, comprenant en outre une étape de perforation d'une portion inférieure et d'une portion supérieure de la cartouche (10).
